Europäisches Patentamt

European Patent Office

Office européen des brevets

(11) Veröffentlichungsnummer: **0 027 098**
**B1**

(12) **EUROPÄISCHE PATENTSCHRIFT**

(45) Veröffentlichungstag der Patentschrift:
**30.05.84**

(21) Anmeldenummer: **80810264.4**

(22) Anmeldetag: **25.08.80**

(51) Int. Cl.³: **B 29 D 23/12**

(54) Verfahren und Einrichtung zur Herstellung von längsverstärkten Kunststoffrohren.

(30) Priorität: **30.08.79 US 71053**

(43) Veröffentlichungstag der Anmeldung:
**15.04.81 Patentblatt 81/15**

(45) Bekanntmachung des Hinweises auf die Patenterteilung:
**30.05.84 Patentblatt 84/22**

(84) Benannte Vertragsstaaten:
**AT BE CH DE FR GB IT LI NL SE**

(56) Entgegenhaltungen:
**DE - A - 2 658 979**
**DE - B - 2 060 261**
**FR - A - 1 363 100**
**US - A - 3 700 519**
**US - A - 3 791 900**
**US - A - 4 053 343**

(73) Patentinhaber: **CIBA-GEIGY AG, Postfach,
CH-4002 Basel (CH)**

(72) Erfinder: **Carter, J. Warne, 4520 Weeks Park Lane,
Wichita Falls Texas 76308 (US)**

## Beschreibung

Die Erfindung betrifft ein Verfahren zur Herstellung von längsverstärkten Rohren und eine Einrichtung zur Durchführung dieses Verfahrens gemäss dem Oberbegriff des Patentanspruchs 1 bzw. 5.

Bei der Herstellung kontinuierlich erzeugter Kunststoffrohre wie harzimprägnierter Faserrohre des Typs, der in US-A-3 700 519 und US-A-4 053 343 offenbart ist, werden mit warmaushärtendem Harz überzogene, kontinuierliche Faserelemente, wie Glasseidenstränge bzw. Glasrovings in Umfangsrichtung auf ein Förderrohr gewickelt. Das Rohr wird auf einer Spindel gedreht und kontinuierlich in axialer Richtung vorangeführt. Normalerweise werden mehrere Wickelstationen verwendet, um Schichten aus harzimprägnierten Fasern auf dem Rohr aufzubauen. Das derart erzeugte Rohr weist im allgemeinen eine Umfangsfestigkeit auf, aber die axiale Festigkeit ist infolge der Abwesenheit von sich in Längsrichtung im Rohr erstreckenden Fasern niedrig. Dementsprechend müssen zusätzliche Schritte ergriffen werden, um die gewünschte Längsverstärkung zu liefern.

Das Anbringen einer Längsverstärkung in fasergewickelten Kunststoffrohren war stets schwieriger und kostspieliger als die Umfangsverstärkung. Eine Art der Längsverstärkung von Kunststoffrohr liegt darin, dass man ein faserverstärktes Band in Längsrichtung auf das Rohr während des Wickelprozesses aufbringt. Dies ist teuer und kompliziert in unzulässiger Weise die Herstellung des Rohres.

Ein anderes Verfahren zum Aufbringen von Längsverstärkungsfasern auf Abschnitte eines Rohres, das durch die Spindel- bzw. Drehbankmethode erzeugt wird, ist in US-A-3 791 900 offenbart. Dort werden harzimprägnierte Faserrovings, die in Umfangsrichtung auf eine rotierende Spindel aufgewickelt werden, über ein Paar mit Abstand angeordneter Rollen geführt, bevor sie auf das Rohr aufgewickelt werden. Zusätzliche Faserrovings, die durch eine hin und her bewegte Führung zugeführt werden, die sich quer zur Bewegungsrichtung der Umfangsfasern bewegt, werden auf die Schicht der Umfangsfasern abgelegt, welche über die Rollen laufen. Die zusätzlichen Fasern werden mit einer Rate, die grösser ist als die Rate, mit welcher die Umfangsfasern aufgewickelt werden, auf dem Rohr als Schlaufen oder Schlingen abgelegt und sind allgemein in Längsrichtung derart angeordnet, dass sie eine harzimprägnierte Matte bilden, welche auf der Tragschicht von Umfangsfasern getragen ist und gemeinsam hiermit auf das Rohr gewickelt wird. Diese Technik gestattet nicht die genaue Kontrolle der Ablagerung der Längsverstärkung.

Weiter sind aus der DE-A-2 658 979 und FR-A-1 363 100 Verfahren und Vorrichtungen bekannt, bei welchen zuerst in einem separaten Arbeitsgang aus den Fasersträngen das gewünschte Wickelmuster erzeugt und dieses anschliessend um das Rohr bzw. den Wickeldorn gewickelt wird.

Gemäss DE-A-2 658 979 wird hierzu der zur Bildung der Längsarmierung bestimmte Faserstrang spiralförmig um zwei im gegenseitigen Abstand parallel geführte, zur Bildung der Umfangswicklung bestimmte Trägdrähte gewickelt und jede Schlinge aufgeschnitten. Hierdurch soll ein leiterartiges Wickelmuster entstehen. Dies setzt allerdings voraus, dass der scharf um die Tragdrähte gebogene Faserstrang nach dem Aufschneiden aus eigener Steifheit gerade wird. Imprägnierte Glasfaserrovings sind jedoch viel zu wenig steif (federelastisch), um nach einer scharfen Abbiegung wiederum in ihre ursprüngliche Form zurückzufedern.

Jedenfalls sind mit dem aus der DE-A-2 658 979 bekannten Verfahren und den zur Ausführung dieses Verfahrens offenbarten Vorrichtungen nur relativ steife Drähte (Rovings) verarbeitbar und es ist auch kein präzises Wickelmuster erzielbar. Zudem hängt das ganze Verfahren davon ab, dass die zur Bildung der Längsarmierung bestimmten Drahtstücke sich nicht von den Tragdrähten lösen, bevor das leiterartige Gebilde das Rohr erreicht. Dies ist aber keinesfalls gewährleistet, da die Drahtstücke nur durch die Klebwirkung der Imprägniermasse an den Tragdrähten haften.

Gemäss FR-A-1 363 100 werden zwei aus parallelen Fasersträngen bestehende Bänder zwischen einem Walzenpaar durchgezogen und im Einlaufspalt dieser Walzen mittels eines hin und her laufenden Fadenauges ein weiterer Faserstrang zickzackförmig zwischen die beiden Faserstrangbänder gelegt. Dieses sandwichartige Faserstranggebilde wird anschliessend imprägniert und daraus auf einem Wickeldorn ein Rohr gewickelt. Auch diese Methode kann strengeren Anforderungen an die Präzision des Wicklungsmusters nicht genügen, da eine sichere Positionierung des Zickzack-Faserstranges zwischen den beiden Faserstrangbändern auf dem Weg zum Wickeldorn und durch das Imprägnierbad, insbesondere bei höheren Wickelgeschwindigkeiten nicht gewährleistet ist.

Ein weiterer Nachteil des aus FR-A-1 363 100 bekannten Verfahrens besteht darin, dass im gewickelten Rohr die Anzahl derjenigen Schichten mit in Umfangrichtung verlaufenden Fastersträngen zwangsläufig doppelt so gross ist wie diejenige der Schichten mit in Längsrichtung verlaufenden Fasersträngen.

Durch die vorliegende Erfindung sollen die vorstehend geschilderten Nachteile des bekannten Standes der Technik vermieden und ein Verfahren geschaffen werden, mit welchem das gewählte Wickelmuster sehr präzise am Rohr realisiert werden kann, die Menge der Längsverstärkungsfasern bzw. das Mengenverhältnis Längsfasern zu Umfangsfasern weitgehend ohne systembedingte Einschränkungen wunschgemäss festgelegt werden kann, für die Längs- und die Querfaserwicklungen dieselbe Fasernart verwendet werden kann, und welches insbesondere auch bei hohen Wickelgeschwindigkeiten betriebssicher ist. Ausserdem soll eine Einrichtung zur Durchführung des neuen Verfahrens geschaffen werden.

Die Hauptmerkmale des erfindungsgemässen Verfahrens sind in Anspruch 1 angegeben und jene der erfindungsgemässen Einrichtung in Anspruch 5.

Im folgenden wird die Erfindung anhand eines in den Zeichnungen dargestellten bevorzugten Ausführungsbeispieles näher erläutert; es zeigen:

Fig. 1 eine perspektivische Gesamtansicht der Einrichtung,

Fig. 2 eine Seitenansicht der Einrichtung der Fig. 1 unter Weglassung einiger Teile,

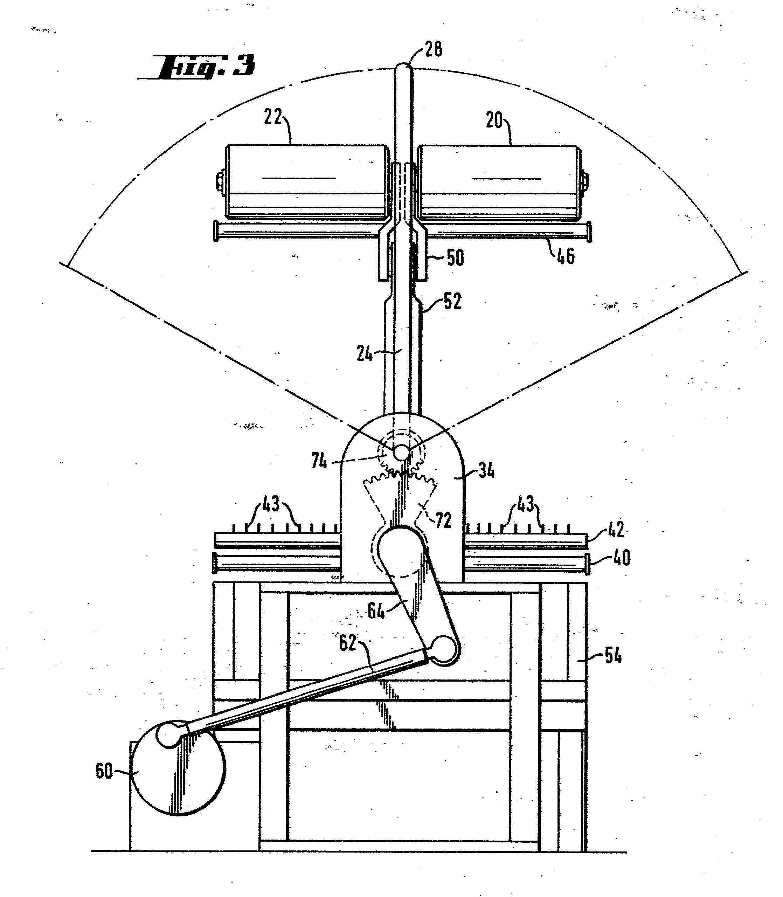

Fig. 3 eine Vorderansicht eines Teils der Einrichtung der Fig. 1,

Fig. 4 eine vergrösserte Ansicht eines Details der Fig. 3,

Fig. 5 einen Schnitt etwa in der Ebene der Linie 5—5 der Fig. 4,

Fig. 6 eine Detailvariante der Fig. 1 in perspektivischer Darstellung,

Fig. 7 eine Detailvariante zu Fig. 4, und

Fig. 8 einen Schnitt etwa in der Ebene der Linie 8—8 in Fig. 7.

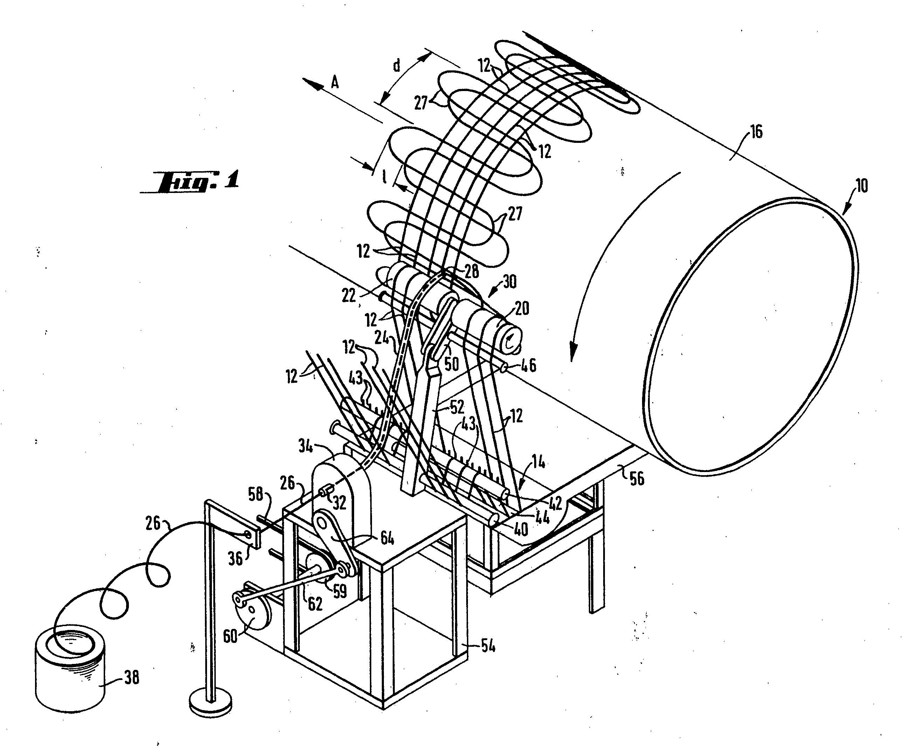

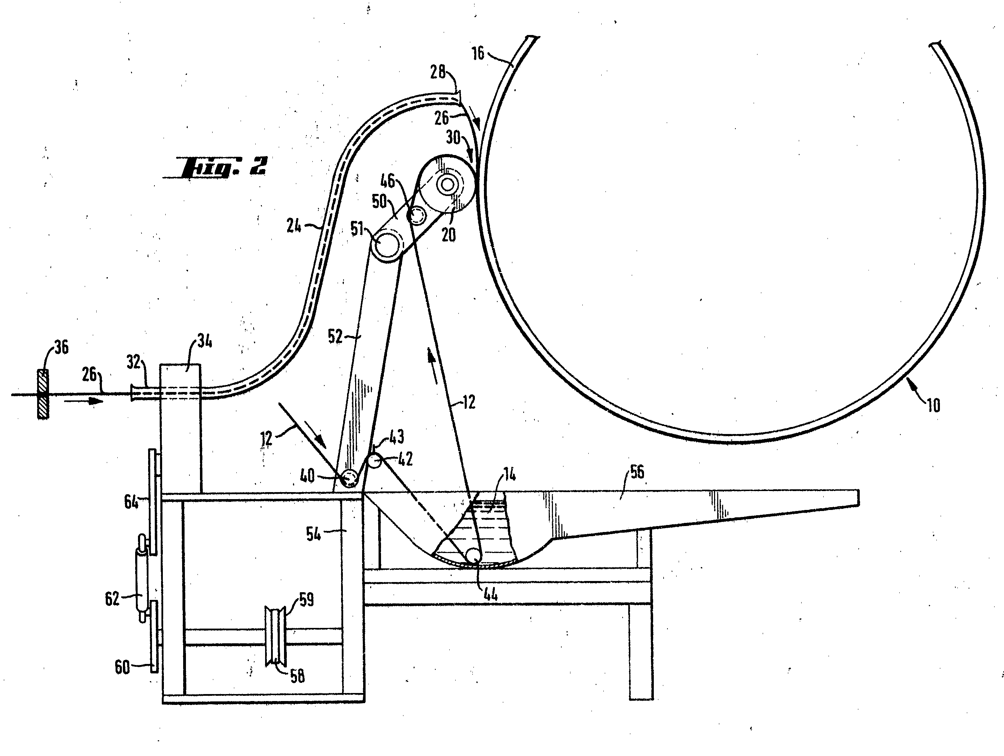

Gemäss den Fig. 1 und 2 wird ein Kunststoffrohr 10, beispielsweise ein mit harzimprägnierten Fasern verstärktes Rohr, das kontinuierlich erzeugt wurde, wie dies beispielsweise in den oben erwähnten US-A-3 700 519 und 4 053 343 beschrieben ist, deren Offenbarungsgehalt durch die Bezugnahme ausdrücklich in diese Unterlagen mit aufgenommen wird, entgegen dem Uhrzeigersinn auf einer Spindel (nicht dargestellt) gedreht und gleichzeitig in axialer Richtung A parallel zu einer Längsachse vorangeführt. Das Rohr wird mit einer Geschwindigkeit vorangeführt, welche wesentlich kleiner ist als seine Drehgeschwindigkeit. Mehrere Faserelemente 12, die mehrere kontinuierliche Faserstränge oder Faserrovings sein können, die zwei oder mehr Stränge umfassen, wie beispielsweise aus Glas, werden von einer Vorratsspule (nicht gezeigt) abgezogen, durch ein Harzbad 14 hindurchgeführt und in Umfangsrichtung auf die Oberfläche 16 des sich drehenden Rohres aufgewickelt. Wenn die Umfangs-Faserelemente 12 auf das Rohr aufgewickelt werden, dann werden sie über ein Paar Rollen 20, 22 gezogen, welche in Berührung mit der Oberfläche des Rohres stehen und mit dieser sich drehen. Die Faserelemente 12 veranlassen die Rollen, in engem Eingriff gegen die Glas-Harz-Rohroberfläche gehalten zu werden, so dass die Rollen die Faserelemente gegen das Rohr andrücken.

Eine im wesentlichen S-förmige Zuführungsröhre 24 zum Zuführen der Längsverstärkungs-Faserelemente 26 weist ein Auslassende 28 auf, welches nahe den Rollen 20, 22 angeordnet ist. Die Längs-Faserelemente 26, die die Zuführungsröhre verlassen, werden auf der Oberfläche des Rohres in den Einlaufspalt 30 abgelegt, der zwischen der Oberfläche des Rohres und den Umfangs-Faserelementen 12 gebildet ist, die gerade auf das Rohr an der Stelle aufgewickelt werden, an welcher die Umfangs-Faserelemente durch die Rollen 20, 22 in Berührung mit der Rohroberfläche gedrückt werden. Die Rollen berühren die Rohroberfläche des Einlaufspaltes. Die Zuführungsröhre, welche vorzugsweise aus leichtem Stahl bzw. im Stahlleichtbau gebildet ist, ist an ihrem entgegengesetzten Ende 32 mit einem Getriebemechanismus 34 zum Hin- und Herschwenken der Röhre verbunden. Mittels des Getriebemechanismus wird das Einlassende 32 der Zuführungsröhre derart geschwenkt, dass ihr Auslassende 28 sich in einem Bogen bewegt, dessen Ebene im wesentlichen parallel zur Längsachse des Rohres und des Einlaufspaltes liegt. Da sich die Zuführungsröhre wechselweise von der einen Seite zur anderen schwenkt, werden die Faserelemente 26 zunächst zwischen der einen Rolle und der Oberfläche des sich drehenden Rohres und dann zwischen der anderen Rolle und der Rohroberfläche eingefangen. Auf diese Weise werden die Faserelemente 26 durch die sich schwenkende Zuführungsröhre hindurchgezogen und in Längsrichtung vor und zurück und auf die Rohroberfläche durch die Rollen geführt. Die Faserelemente werden auf das Rohr in einem sinusartigen oder hin und her verlaufenden Muster 27 verlegt, wobei die Erstreckung im wesentlichen in Längsrichtung vorliegt, um das Rohr in Längsrichtung zu verstärken.

Wenn die Längs-Faserelemente 26 auf das Rohr aufgelegt werden, dann berühren die Umfangs-Faserelemente 12, die gerade rund um das Rohr gewickelt werden, unmittelbar die Faserelemente 26, so dass sie diese an der Oberfläche des Rohres an Ort und Stelle halten und sie mit Harz überziehen. Die Führungswirkung der Rollen beim Ablagern der Faserelemente aus der schwingenden Zuführungsröhre 24 in Längsrichtung auf das Rohr stellt in Kombination mit der Haltewirkung der Umfangs-Faserelemente 12 die Kontrolle über das Ablegemuster 27 der Längsverstärkungs-Faserelemente sicher.

Jeder abgeschlossene Zyklus der Hin- und Herbewegung der Zuführungsröhre legt einen Bogen aus Längs-Faserelementen auf das Rohr. Infolge der Drehung des Rohres sind nebeneinanderliegende Bögen in Umfangsrichtung rund um das Rohr mit Abstand angeordnet. Die Geschwindigkeit, mit welcher sich die Röhre 24 schwenkt, bestimmt in Zuordnung der Drehgeschwindigkeit des Rohres den Umfangsabstand d zwischen nebeneinanderliegenden Bögen. Die Axialgeschwindigkeit des Rohrvorschubes pro Umdrehung bestimmt den Längsabstand 1 zwischen den Bögen. Dementsprechend kann durch Steuerung dieser Geschwindigkeiten das Mass der Längsverstärkung, die auf das Rohr aufgebracht wird, gesteuert werden, wobei die axiale Festigkeit des Rohres gesteuert werden kann. Andere, steuerbare Faktoren, welche das Mass der Längsverstärkung bewirken, die auf das Rohr aufgebracht wird, umfassen die Ergiebigkeit (m/kg) der Gesamtzahl der Stränge der Längsverstärkungs-Faserelemente, die in die Röhre 24 eingespeist werden, den Abstand vom Ende der einen Rolle zum Ende der anderen Rolle, welcher die Länge der Bögen bestimmt, die auf dem Rohr abgelegt sind, und die Bogenlänge, über welche die Zuführungsröhre schwenkt.

Mehrere Längs-Faserelemente 26 können durch die Zuführungsröhre 24 zugeführt werden. Die Längs-Faserelemente wie auch die Umfangs-Faserelemente 12 können entweder eine Mehrzahl einzelner Faserstränge oder eine Mehrzahl von Rovings sein, welche zwei oder mehrere Faserstränge umfassen. Es ist ein Vorzug der Erfindung, dass die Längsverstärkungs-Faserelemente demselben Typ von Standard-Rovings angehören können, wie die Faserrovings, die für die Umfangsverstärkung verwendet werden, da diese am wenigsten teuer verfügbar sind.

Die Längs-Faserelemente 26 werden der Röhre 24 durch eine Führung 36 von einem ortsfesten Spulengestell 38 zugeführt. Da das Spulengestell ortsfest ist, kann es nötigenfalls nachgefüllt werden, ohne dass man die Maschine anhält. Dies ist ein wesentlicher Vorteil bei einem kontinuierlichen Rohrfertigungsprozess. In ähnlicher Weise können die Umfangs-Faserelemente 12 ebenfalls von stationären Spulengestellen (nicht dargestellt) zugeführt werden, wie dies die Lehre der vorher erwähnten US-Patente enthält.

Die Umfangs-Faserelemente 12, die auf das Rohr aufgewickelt werden, werden durch das Harzbad 14 rund um die Führungen 40, 42, 44 geführt, wo sie mit Harz überzogen werden. Die Führung 42 kann mehrere Stifte 43 aufweisen, um die Faserelemente in Längsrichtung auseinanderzuspreizen. Die harzimprägnierten Faserelemente werden dann rund um die Führung 46 zu den Rollen 20, 22 geführt. Die Rollen 20, 22 und die Führung 46 können von einem Arm 50 getragen sein, der zur Drehung am einen Ende 51 an einem festen Arm 52 schwenkbar gelagert ist, der seinerseits an einem Rahmen 54 angebracht ist. Der Rahmen 54 kann in ähnlicher Weise andere Teile der Einrichtung tragen, wie etwa eine Wanne 56 zur Aufnahme des Harzbades, den Getriebemechanismus 34 und den Antriebsmechanismus für den Getriebemechanismus.

Der Getriebemechanismus, welcher der Zuführungsröhre 24 die Schwenkbewegung mitteilt, ist von einem Motor (nicht gezeigt) durch einen Riemen 58, eine Riemenscheibe 59 und ein Kurbelrad 60 angetrieben. Der Motor kann einen Antrieb mit variabler Geschwindigkeit umfassen (ebenfalls nicht dargestellt), um die Drehzahl des Motors auf bekannte Weise zu steuern, und somit auch die Bewegungsgeschwindigkeit der Zuführungsröhre. Am Kurbelrad ist ein Arm 62 angebracht, welcher eine Verbindung mit einem Arm 64 des Getriebemechanismus herstellt. Wenn sich das Kurbelrad dreht, dann bewegt sich der Arm 64 hin und her, und zwar vorzugsweise über einen Winkel von 30° hinweg, wobei er die Zuführungsröhre veranlasst, sich hin und her zu bewegen.

Der Getriebemechanismus 34 ist bevorzugt ein 4 : 1-Übersetzungsgetriebe, so dass eine Schwenkbewegung des Armes 64 um 30° eine Bewegung des Auslassendes 28 der Zuführungsröhre um einen Bogen von 120° erzeugt. Die durch den Getriebemechanismus erzeugte Bewegung der Zuführungsröhre ist einer einfachen, harmonischen Bewegung angenähert, welche zum Auflegen eines gleichförmigen Musters einer Längsverstärkung erwünscht ist.

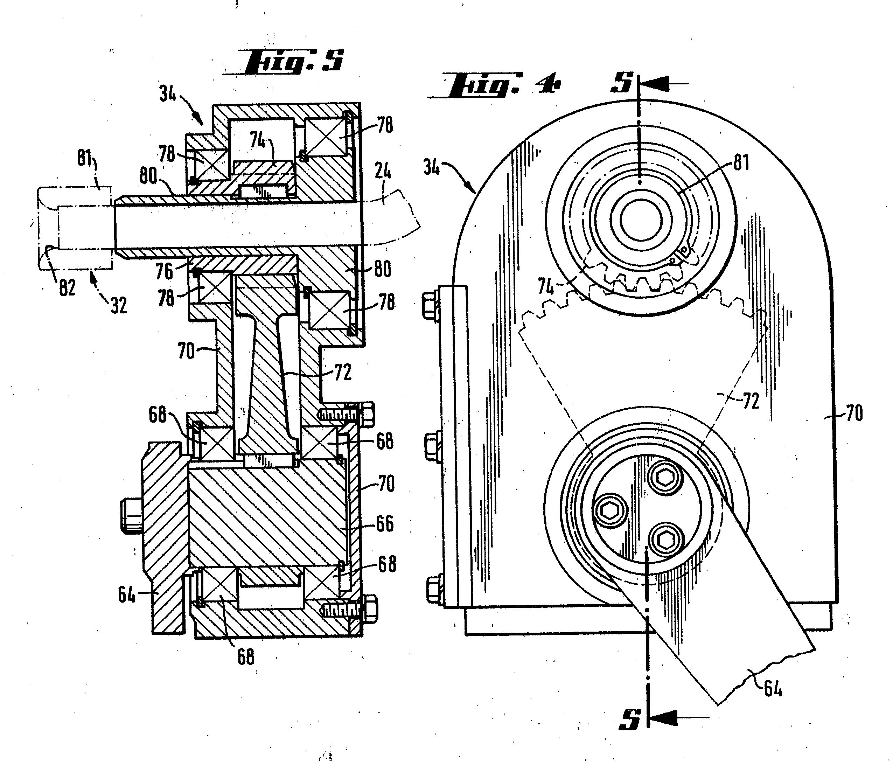

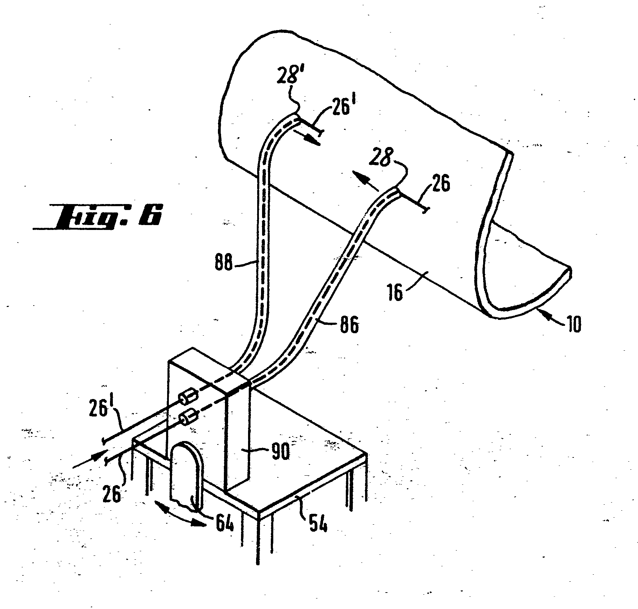

Gemäss den Fig. 4 und 5 umfasst der Getriebemechanismus im wesentlichen eine Welle 66, die zur Drehung mittels Lagern 68 in einem Rahmen 70 abgestützt ist, und an dem Arm 64 angebracht ist. An der Welle 66 befindet sich ein Sektor-Zahnrad 72, welches mit einem zweiten Zahnrad 74 kämmt, das eine Welle 76 aufweist, die zur Drehung mittels Lagern 78 im Rahmen abgestützt ist. Die Zuführungsröhre 24 läuft durch eine Bohrung in der Drehachse des Zahnrades 74 hindurch und ist hieran mittels einer Hülse 80 angebracht. Wenn der Arm 64 unter dem Einfluss des Armes 62 und des Kurbelrades 60 vor- und rückwärts schwenkt, dann schwenkt das Sektorzahnrad 72 vorwärts und rückwärts, was das Zahnrad 74 und die Zuführungsröhre 24 zu einer Hin- und Herbewegung veranlasst, wobei dem Auslassende 28 der Zuführungsröhre eine Schwenkbewegung mitgeteilt wird. Das Einlassende 32 der Zuführungsröhre kann eine Hülse 81 (Fig. 5) aufweisen, die einen ausgerundeten inneren Abschnitt 82 an ihrem Einlass aufweist, um die Faserelemente 26 zu führen, wenn sie durch die Zuführungsröhre gezogen werden.

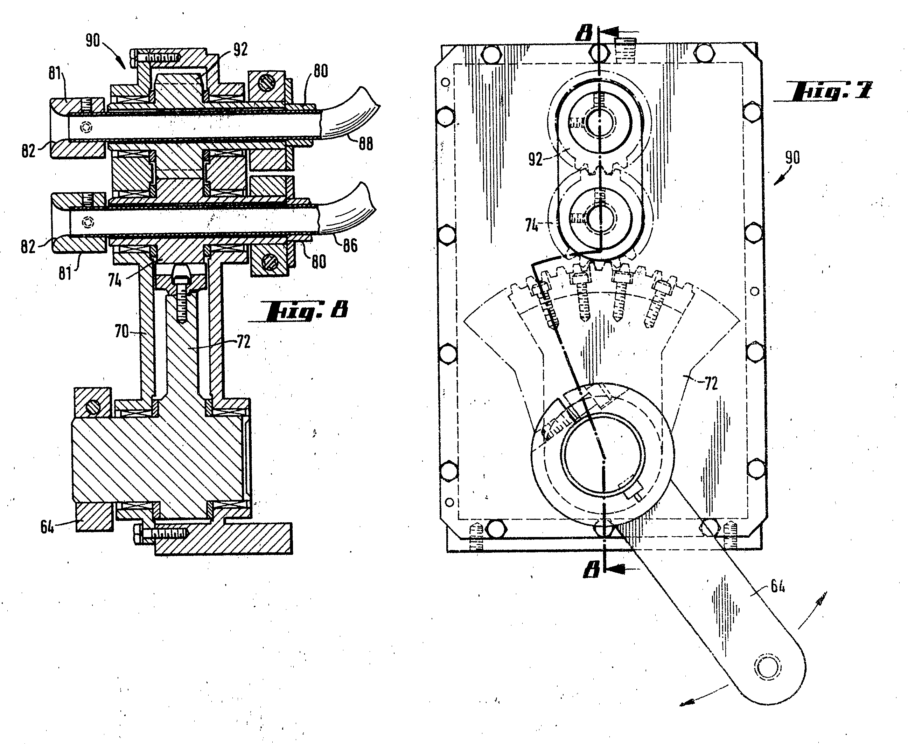

Die Fig. 6 bis 8 stellen ein anderes Ausführungsbeispiel dar, bei welchem zwei Zuführungsröhren 86, 88, die derart angeordnet sind, dass sie in entgegengesetzten Richtungen schwenken, zum Zuführen der Längs-Faserelemente 26, 26' zum Rohr verwendet sind. Ihre Bewegung wird durch einen Getriebemechanismus 90 gesteuert, der ähnlich ist dem Getriebemechanismus 34, mit der Ausnahme, dass ein drittes Zahnrad 92 mit dem Zahnrad 74 zur Drehung in der entgegengesetzten Richtung zum Zahnrad 74 gekoppelt ist. Dementsprechend schwenken, wenn das Sektorzahnrad 72 unter der Wirkung des Armes 64 hin und her schwenkt, die Zuführungsröhren 86 und 88, die durch die Bohrungen der Zahnräder 74 bzw. 92 hindurchtreten und hieran angebracht sind, in entgegengerichteten Bögen. Die Einzelheiten des Getriebemechanismus 90 sind in Fig. 7 und 8 dargestellt, wo Bestandteile, welche Funktionen ähnlich zu jenen der Fig. 4 und 5 durchführen, dieselben Bezugszeichen tragen.

Die Variante der Fig. 6 bis 8 gestattet es, dass eine grössere Menge an Längsverstärkung auf das Rohr aufgebracht wird, um eine grössere axiale Festigkeit zu liefern.

Während die vorangegangene Beschreibung Bezug auf spezielle Ausführungsbeispiele genommen hat, wird ausdrücklich darauf hingewiesen, dass dem Fachmann Abänderungen möglich sind, ohne dass er den Gedanken und Bereich der Erfindung verlässt, wie sie sich nicht nur aus der Beschreibung, sondern auch den beigefügten Ansprüchen ergeben.

**Patentansprüche**

1. Verfahren zur Herstellung von längsverstärkten Kunststoffrohren, bei welchem Faserelemente in Umfangsrichtung und gleichzeitig weitere Faserelemente in Längsrichtung auf die Oberfläche des Rohres gewickelt werden, dadurch gekennzeichnet, dass die Umfangs- und die Längs-Faserelemente (12 bzw. 26) voneinander getrennt an das Rohr (10) herangeführt werden und dass erst dort die Längs-Faserelemente (26) direkt in den durch die Rohroberfläche (16) und die Umfangs-Faserelemente (12) gebildeten Einlaufspalt (30) mit einer in Rohrlängsrichtung hin und her gehenden Bewegung auf der Rohroberfläche abgelegt werden.

2. Verfahren nach Anspruch 1, dadurch gekennzeichnet, dass die Umfangs-Faserelemente (12) mittels mindestens einer Umlenk- und Anpresswalze (20; 22) auf die Oberfläche (16) des Rohres (10) gewickelt und dort zusammen mit den gleichzeitig einlaufenden Längs-Faserelementen (26) durch die Walze auf die Rohroberfläche (16) gedrückt werden.

3. Verfahren nach einem der vorangehenden Ansprüche, dadurch gekennzeichnet, dass weitere Längs-Faserelemente (26') gleichzeitig zu den erstgenannten Längs-Faserelementen (26) und benachbart zu diesen im verlängerten Einlaufspalt (30) mit entgegengesetzten Richtungen der Hinundherbewegung auf der Rohroberfläche (16) abgelegt werden.

4. Verfahren nach einem der vorangehenden Ansprüche, dadurch gekennzeichnet, dass die Menge bzw. Dichte der auf das Rohr (10) abgelegten Längs-Faserelemente (26, 26') durch Einstellung der Geschwindigkeit (Frequenz) der Hinundherbewegung des Ablegevorganges gesteuert wird.

5. Einrichtung zur Durchführung des Verfahrens nach Anspruch 1, mit Mitteln zum gleichzeitigen Aufwickeln von Faserelementen in Umfangsrichtung und in Längsrichtung auf das Rohr, dadurch gekennzeichnet, dass die Mittel zum Aufwickeln der Längs-Faserelemente (26) ein Zuführungs- und Ablegeorgan umfassen, dessen Auslass (28) im Bereich des durch das Rohr (10) und den Einlauf der Umfangs-Faserelemente (12) gebildeten Einlaufspaltes (30) im wesentlichen parallel zur Längsachse des Rohres (10) hin und her schwingend angeordnet ist.

6. Einrichtung nach Anspruch 5, dadurch gekennzeichnet, dass das Zuführungs- und Ablegeorgan durch eine im wesentlichen S-förmige Röhre (24, 86) gebildet ist, deren Einlassende (32) im wesentlichen senkrecht zur Längsachse des zu bewickelnden Rohres (10) verlaufend drehbar gelagert an einen Schwenkantrieb angeschlossen ist.

7. Einrichtung nach Anspruch 5 oder 6, gekennzeichnet durch ein zweites Zuführungs- und Ablegeorgan für weitere Längs-Faserelemente (26'), welches gleich ausgebildet ist wie das erstgenannte Zuführungs- und Ablegeorgan und neben diesem mit seinem Anlassende mit derselben Frequenz jedoch in entgegengesetzten Richtungen schwingend angeordnet ist.

8. Einrichtung nach Anspruch 7, dadurch gekennzeichnet, dass die beiden Zuführungs- und Ablegeorgane für die Längs-Faserelemente (26 bzw. 26') zur Schwingung ihrer Auslassenden (28 bzw. 28') an einen gemeinsamen Antrieb (64) um 180° phasenverschoben angeschlossen sind.

9. Einrichtung nach einem der Ansprüche 5 bis 8, dadurch gekennzeichnet, dass die Frequenz der Hinundherbewegung bzw. des Schwenkantriebes des Auslasses (28 bzw. 28') des Zuführungs- und Ablegeorganes für die Längs-Faserelemente (26 bzw. 26') regelbar ist.

10. Einrichtung nach einem der Ansprüche 5 bis 9, dadurch gekennzeichnet, dass die Mittel zum Aufwickeln der Umfangs-Faserelemente (12) mindestens eine Umlenkwalze (20; 22) umfassen, welche mit Druck auf der Oberfläche (16) des zu bewickelnden Rohres (10) abläuft und über welche die Umfangs-Faserelemente (12) auf das Rohr (10) auflaufen, so dass diese Walze sowohl die Umfangs- als auch die Längs-Faserelemente (12 bzw. 26) unmittelbar im Einlaufspalt (30) an die Rohroberfläche (16) drückt und dort fixiert.

**Claims**

1. Method for the production of longitudinally reinforced plastics pipes, in which fibre elements are wound circumferentially and at the same time further fibre elements are wound in longitudinal direction onto the surface of the pipe, characterised in that the circumferential and longitudinal fibre elements (12 and 26 respectively) are brought to the pipe (10) separately from each other and that not until there are the longitudinal fibre elements (26) deposited on the pipe surface directly into the inlet gap (30) formed by the pipe surface (16) and the circumferential fibre elements (12) with a reciprocating movement in the longitudinal direction of the pipe.

2. Method according to Claim 1, characterised in that the circumferential fibre elements (12) are wound onto the surface (16) of the pipe (10) by means of at least one guide- and pressure roller (20, 22) and together with the simultaneously arriving longitudinal fibre elements (26) are pressed by the roller onto the pipe surface (16).

3. Method according to one of the preceding Claims, characterised in that further longitudinal fibre elements (26') are deposited on the pipe surface (16) at the same time as the aforesaid longitudinal fibre elements (26) and adjacent to the latter in the elongated inlet gap (30) with opposite directions of the reciprocating movement.

4. Method according to one of the preceding Claims, characterised in that the quantity or density of the longitudinal fibre elements (26, 26') deposited onto the pipe (10) is controlled by adjustment of the speed (frequency) of the reciprocating movement of the deposition process.

5. Apparatus for carrying out the method according to Claim 1 with means for the simultaneous winding of fibre elements in the circumferential direction and in the longitudinal direction onto the pipe, characterised in that the means for the winding of the longitudinal fibre elements (26) comprise a supply- and depositing member, the outlet (28) of which is arranged in the region of the inlet gap (30) formed by the pipe (10) and the inlet of the circumferential fibre elements (12) oscillating substantially parallel to the longitudinal axis of the pipe (10).

6. Apparatus according to Claim 5, characterised in that the supply- and depositing member is formed by a substantially S-shaped tube (24, 86), the inlet end (32) of which, mounted to be rotatable substantially perpendicular to the longitudinal axis of the pipe (10) around which the material is to be wound, is connected to a pivot drive.

7. Apparatus according to Claim 5 or 6, characterised by a second supply- and depositing member for further longitudinal fibre elements (26') which is identical in construction to the aforementioned supply- and depositing member and is arranged adjacent to the latter with its inlet end oscillating with the same frequency but in opposite directions.

8. Apparatus according to Claim 7, characterised in that the two supply- and depositing members for the longitudinal fibre elements (26 or 26' respectively) are connected 180° out of phase to a common driving gear (64) for the oscillation of their outlet ends (28 or 28' respectively).

9. Apparatus according to one of Claims 5 to 8, characterised in that the frequency of the reciprocating movement or of the pivot drive of the outlet (28 or 28' respectively) of the supply- and depositing member for the longitudinal fibre elements (26 or 26' respectively) is regulatable.

10. Apparatus according to one of Claims 5 to 9, characterised in that the means for winding the circumferential fibre elements (12) comprise at least one guide roller (20, 22), which runs with pressure on the surface (16) of the pipe (10) around which the material is to be wound, and via which the circumferential fibre elements (12) run onto the pipe (10), so that this roller presses both the circumferential and also the longitudinal fibre elements (12 or 26 respectively) directly in the inlet gap (30) against the pipe surface (16) and fixes them in position there.

## Revendications

1. Procédé de fabrication de tubes en matière plastique renforcés longitudinalement, dans lequel on enroule ou bobine sur la surface du tube des éléments de fibres dans la direction circonférentielle et en même temps d'autres éléments de fibres dans la direction longitudinale, caractérisé par le fait qu'on amène les éléments de fibres circonférentiels et les éléments de fibres longitudinaux (12, 26) séparément les uns des autres au tube (10) et que l'on ne dépose qu'ici, sur la surface (16) du tube, les éléments de fibres longitudinaux (26) directement dans l'interstice d'admission (30) formé entre ladite surface de tube et les éléments de fibres circonférentiels (12), avec un mouvement de va-et-vient dans la direction longitudinale du tube.

2. Procédé selon la revendication 1, caractérisé par le fait que l'on enroule les éléments de fibres circonférentiels (12) sur la surface (16) du tube (10) au moyen d'au moins un cylindre de renvoi et de pression (20; 22) et que l'on presse lesdits éléments (12) sur ladite surface (16) du tube, sous l'effet dudit cylindre, conjointement avec les éléments de fibres longitudinaux (26) admis simultanément.

3. Procédé selon l'une des revendications précédentes, caractérisé par le fait que l'on dépose sur la surface (16) du tube d'autres éléments de fibres longitudinaux (26') en même temps que les éléments de fibres longitudinaux (26) cités en premier lieu et de façon contiguë à ceux-ci dans l'interstice d'admission (30) prolongé, suivant un mouvement de va-et-vient effectué dans des directions opposées.

4. Procédé selon l'une des revendications précédentes, caractérisé par le fait que la quantité ou la densité des éléments de fibres longitudinaux (26, 26') déposés sur le tube (10) est réglée par la vitesse (fréquence) du mouvement de va-et-vient du processus de dépôt.

5. Dispositif pour la mise en œuvre du procédé selon la revendication 1, comportant des moyens pour enrouler simultanément sur le tube des éléments de fibres dans la direction circonférentielle et dans la direction longitudinale, caractérisé par le fait que les moyens d'enroulement des éléments de fibres longitudinaux (26) comprennent un organe d'amenée et de dépôt dont la sortie (28) est disposée dans la région de l'interstice d'admission (30) formé entre le tube (10) et l'entrée des éléments de fibres circonférentiels (12) de façon à osciller suivant un mouvement de va-et-vient sensiblement parallèle à l'axe longitudinal du tube (10).

6. Dispositif selon la revendication 5, caractérisé par le fait que l'organe d'amenée et de dépôt est formé par un tuyau (24, 86), sensiblement en forme de S, dont l'extrémité d'entrée (32) est montée pivotante de façon à s'étendre sensiblement perpendiculairement à l'axe longitudinal du tube (10) à bobiner en étant raccordée à une commande d'oscillation.

7. Dispositif selon la revendication 5 ou 6, caractérisé par le fait qu'il comprend un deuxième organe d'amenée et de dépôt pour d'autres éléments de fibres longitudinaux (26'), qui est agencé de façon identique à l'organe d'amenée et de dépôt cité en premier et qui est disposé à côté de celui-ci de façon que son extrémité de sortie oscille avec la même fréquence, mais dans des directions opposées.

8. Dispositif selon la revendication 7, caractérisé par le fait que les deux organes d'amenée et de dépôt pour les éléments de fibres longitudinaux (26 et 26') sont raccordés, pour l'oscillation de leurs extrémités de sortie (28 et 28'), à une commande commune (64) de façon à être déphasés de 180°.

9. Dispositif selon l'une des revendications 5 à 8, caractérisé par le fait que la fréquence du mouvement de va-et-vient ou de la commande d'oscillation de la sortie (28 et 28') de l'organe d'amenée et de dépôt pour les éléments de fibres longitudinaux (26 et 26') est réglable.

10. Dispositif selon l'une des revendications 5 à 9, caractérisé par le fait que les moyens d'enroulement ou de bobinage des éléments de fibres circonférentiels (12) comprennent au moins un cylindre de renvoi (20; 22) qui roule à pression sur la surface (16) du tube (10) à bobiner et par l'intermédiaire duquel les éléments de fibres circonférentiels (12) arrivent sur le tube (10), de façon que ledit cylindre presse aussi bien les éléments de fibres circonférentiels (12) que les éléments de fibres longitudinaux (26) sur la surface (16) du tube directement dans l'interstice d'admission (30) pour les fixer ici sur ladite surface.

0 027 098

**Fig. 1**

*Fig. 2*

Fig: 3

## Fig. 5

## Fig. 4

**Fig. 6**

Fig. 7

90
72
92
74
64

Fig. 8

88
86
80
80
92
72
74
70
90
81
81
82
82
64

19